(19) Europäisches Patentamt

European Patent Office

Office européen des brevets

(11) **EP 4 730 433 A1**

(12) **EUROPEAN PATENT APPLICATION**

(43) Date of publication:
**22.04.2026 Bulletin 2026/17**

(21) Application number: **25207536.1**

(22) Date of filing: **08.10.2025**

(51) International Patent Classification (IPC):
**H01M 4/52** $^{(2010.01)}$     **H01M 4/58** $^{(2010.01)}$

(52) Cooperative Patent Classification (CPC):
**H01M 4/58; H01M 4/52**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **15.10.2024 KR 20240140558**

(71) Applicant: **SAMSUNG SDI CO., LTD.**
**Yongin-si, Gyeonggi-do 17084 (KR)**

(72) Inventors:
• **YEOM, Jingu**
  **17084 Yongin-si (KR)**

• **SUH, Soonsung**
  **17084 Yongin-si (KR)**
• **PARK, Yong-Kyun**
  **17084 Yongin-si (KR)**
• **HAN, Da-Un**
  **17084 Yongin-si (KR)**
• **HA, Eunhyeon**
  **17084 Yongin-si (KR)**

(74) Representative: **Maiwald GmbH**
**Elisenhof**
**Elisenstraße 3**
**80335 München (DE)**

(54) **RECHARGEABLE LITHIUM BATTERIES**

(57) A rechargeable lithium battery includes a positive electrode including a positive electrode active material layer, a negative electrode including a negative electrode active material layer, and an electrolyte, wherein the positive electrode active material layer includes a lithium iron phosphate positive electrode active material, and wherein the rechargeable lithium battery has an N/P ratio of greater than or equal to about 1.33 and less than about 1.48.

FIG. 1

EP 4 730 433 A1

**Description**

BACKGROUND

1. Field

The present disclosure relates to a rechargeable lithium battery.

2. Description of the Related Art

Recently, with the rapid spread of electronic devices that use batteries, such as mobile phones, laptop computers, and electric vehicles, the demand for rechargeable batteries with high energy density and high capacity is rapidly increasing. Accordingly, research and development to improve the performance of rechargeable lithium batteries is actively underway.

Rechargeable lithium batteries include a positive electrode and a negative electrode with an active material capable of intercalating and deintercalating lithium ions, and an electrolyte solution. Rechargeable lithium batteries generate electrical energy through oxidation and reduction reactions when lithium ions are intercalated and deintercalated from the positive electrode and the negative electrode.

SUMMARY

Some example embodiments provide a rechargeable lithium battery including a positive electrode including a positive electrode active material layer, a negative electrode including a negative electrode active material layer, and an electrolyte, wherein the positive electrode active material layer includes a lithium iron phosphate positive electrode active material, and the rechargeable lithium battery has an N/P ratio of greater than or equal to about 1.33 and less than about 1.48.

A loading level of the positive electrode active material layer may be about 39 $mg/cm^2$ to about 40 $mg/cm^2$.

A loading level of the negative electrode active material layer may be about 20 $mg/cm^2$ to about 24 $mg/cm^2$.

A loading level of the negative electrode active material layer may be about 21.8 $mg/cm^2$ to about 23.6 $mg/cm^2$.

A thickness of the positive electrode active material layer may be about 150 $\mu$m to about 170 $\mu$m.

A thickness of the negative electrode active material layer may be about 150 $\mu$m to about 180 $\mu$m.

A mixture density of the positive electrode may be about 2.0 g/cc to about 4.0 *g/cc.*

A mixture density of the negative electrode may be about 1.0 g/cc to about 4.0 g/cc.

The lithium iron phosphate positive electrode active material may include a compound represented by Chemical Formula 1, $Li_{a1}Fe_{(1-x1)}M1_{x1}PO$, wherein, in Chemical Formula 1, $0.90 \leq a1 \leq 1.5$, $0 \leq x1 \leq 0.4$, and M1 is Al, B, Ca, Ce, Cr, Cu, La, Mg, Mn, Mo, Nb, Ni, Si, Sn, Sr, Ti, V, W, Y, Zn, Zr, or a combination thereof, or Chemical Formula 2, $Li_{a2}Mn_{x2}Fe_{(1-x2-y2)}M_{2y2}PO_4$, wherein, in Chemical Formula 2, $0.90 \leq a2 \leq 1.5$, $0.1 \leq x2 \leq 0.9$, $0 \leq y2 \leq 0.9$, and M2 is Al, B, Ca, Ce, Cr, Cu, La, Mg, Mo, Nb, Ni, Si, Sn, Sr, Ti, V, W, Y, Zn, Zr, or a combination thereof.

The lithium iron phosphate positive electrode active material may include $LiFePO_4$, $LiMn_{0.7}Fe_{0.3}PO_4$, $LiMn_{0.6}Fe_{0.4}PO_4$, $LiMn_{0.5}Fe_{0.5}PO_4$, $LiMn_{0.4}Fe_{0.6}PO_4$, $LiMn_{0.3}Fe_{0.7}PO_4$, or a combination thereof.

The negative electrode active material layer may include a carbon negative electrode active material.

The carbon negative electrode active material may include crystalline carbon, amorphous carbon or a combination thereof.

The negative electrode active material layer may further include a silicon negative electrode active material.

BRIEF DESCRIPTION OF THE DRAWINGS

Features will become apparent to those of skill in the art by describing in detail exemplary embodiments with reference to the attached drawings, in which:

FIGS. 1 to 4 are cross-sectional views schematically showing rechargeable lithium batteries according to some example embodiments.
FIG. 5 is a graph measuring the change in negative electrode potential in the rechargeable lithium battery cells according to Example 1 and Comparative Example 1.
FIG. 6 is a graph showing the capacity retention rates during room temperature charge/discharge of rechargeable lithium battery cells according to Examples 1 to 2 and Comparative Examples 1 to 4.

DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. In addition, it will also be understood that when a layer is referred to as being "between" two layers, it can be the only layer between the two layers, or one or more intervening layers may also be present. Like reference numerals refer to like elements throughout.

The terminology used herein is used to describe embodiments only, and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and the like of the constituents.

Here, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In addition, "layer" herein includes not only a shape formed on the whole surface when viewed from a plan view, but also a shape formed on a partial surface.

Unless otherwise specified in this specification, what is indicated in the singular may also include the plural. In addition, unless otherwise specified, "A or B" may mean "including A, including B, or including A and B."

"Metal" is interpreted as a concept including ordinary metals, transition metals and metalloids (semi-metals).

As used herein, when a definition is not otherwise provided, the particle diameter may be an average particle diameter. In addition, the particle diameter may refer to an average particle diameter (D50), which means the diameter of particles having a cumulative volume of 50 volume% in the particle size distribution. The average particle diameter (D50) may be measured by a method well known to those skilled in the art, for example, by a particle size analyzer, or by a transmission electron microscope image, or a scanning electron microscope image. Alternatively, a dynamic light-scattering measurement device is used to perform a data analysis, and the number of particles is counted for each particle size range. From this, the average particle diameter (D50) value may be easily obtained through a calculation. Alternatively, it can be measured using a laser diffraction method. When measuring by the laser diffraction method, more specifically, the particles to be measured are dispersed in a dispersion medium, and then introduced into a commercially available laser diffraction particle diameter measuring device (e.g., Microtrac MT 3000), and ultrasonic waves of about 28 kHz with an output of 60 W are irradiated to calculate an average particle diameter (D50) on the basis of 50% of the particle diameter distribution in the measuring device.

Rechargeable Lithium Battery

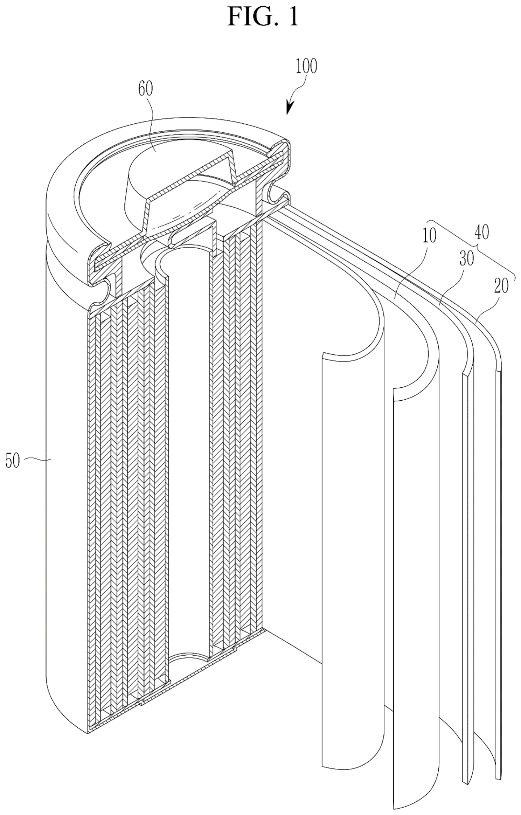

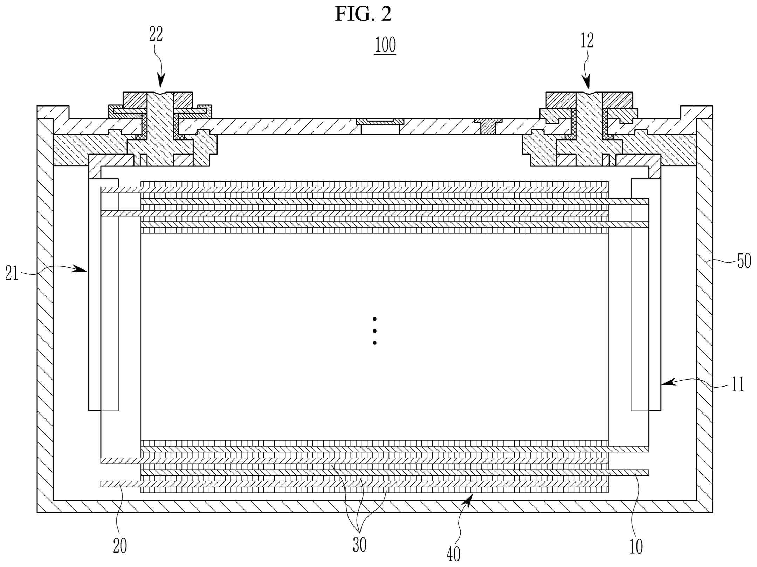

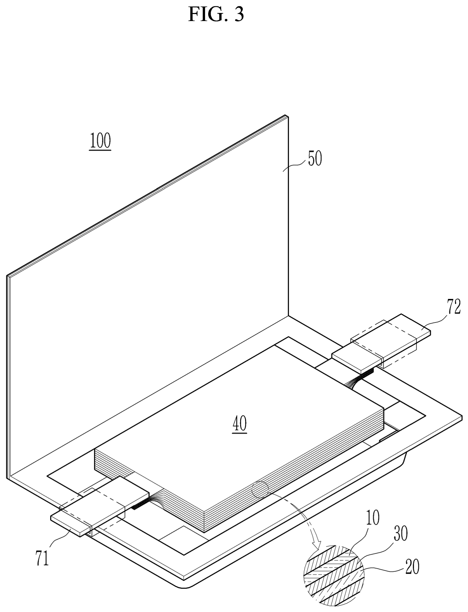

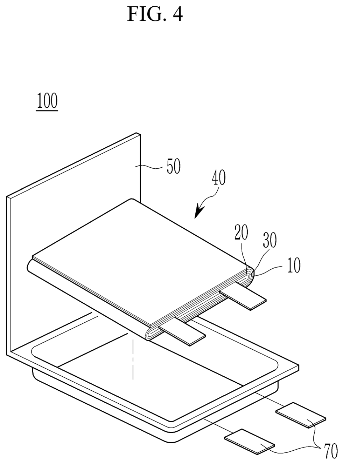

The rechargeable lithium battery may be classified into cylindrical, prismatic, pouch, coin, and the like depending on its shape. FIGS. 1 to 4 are schematic views illustrating rechargeable lithium batteries according to some example embodiments. FIG. 1 shows a cylindrical battery, FIG. 2 shows a prismatic battery, and FIGS. 3 and 4 show pouch-type batteries.

Referring to FIGS. 1 to 4, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. For example, the rechargeable lithium battery 100 may include a sealing member 60 that seals the case 50, as shown in FIG. 1. For example, as illustrated in FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 may include an electrode tab 70, i.e., a positive electrode tab 71 and a negative electrode tab 72, serving as an electrical path for inducing the current formed in the electrode assembly 40 to the outside.

The rechargeable lithium battery according to some example embodiments may be applied to, e.g., automobiles, mobile phones, and/or various types of electrical devices. For example, the rechargeable lithium battery may be applied to an energy storage system (ESS).

The rechargeable lithium battery according to some example embodiments includes a positive electrode including a positive electrode active material layer, a negative electrode including a negative electrode active material layer, and an electrolyte. The positive electrode active material layer includes a lithium iron phosphate positive electrode active material, and the rechargeable lithium battery has an N/P ratio of greater than or equal to about 1.33 and less than about 1.48.

The N/P ratio represents a ratio of a capacity of the negative electrode to a capacity of the positive electrode. When the N/P ratio is adjusted to the above appropriate range, a rechargeable lithium battery with maximized room-temperature cycle-life characteristics may be implemented by reducing deterioration of the negative electrode.

For example, if the N/P ratio of the rechargeable lithium battery is less than about 1.33, a degree of deterioration of the negative electrode is large, so cycle-life characteristics of the battery may deteriorate. In addition, if the N/P ratio of the rechargeable lithium battery is greater than or equal to about 1.48, lithium dendrites may be excessively generated on the negative electrode, which may cause, e.g., battery short-circuiting.

For example, the N/P ratio of the rechargeable lithium battery may be measured by Equation 1.

$$\text{N/P ratio} = \frac{\text{loading level of negative electrode active material layer} * \text{wt\% of negative electrode active material relative to 100 wt\% of negative electrode active material layer} * \text{capacity of negative electrode active material}}{\text{loading level of positive electrode active material layer} * \text{wt\% of positive electrode active material relative to 100 wt\% of positive electrode active material layer} * \text{capacity of positive electrode active material}} \qquad \text{[Equation 1]}$$

Referring to Equation 1, the N/P ratio of the rechargeable lithium battery can be set by controlling the loading level of the electrode (positive electrode and/or negative electrode), active material layer, the wt% of the electrode active material, and the capacity of the electrode active material.

The loading level of the electrode active material layer may refer to an amount (mg) of electrode active material per unit area ($1 \text{ cm}^2$) of the electrode. The higher the loading level value of the electrode, the higher the capacity of the electrode. However, if it becomes too high, the mechanical stability of the electrode may deteriorate.

For example, the loading level of the positive electrode active material layer may be about 39 mg/cm$^2$ to about 40 mg/cm$^2$, e.g., about 39 mg/cm$^2$ to about 39.8 mg/cm$^2$, about 39 mg/cm$^2$ to about 39.6 mg/cm$^2$, or about 39 mg/cm$^2$ to about 39.4 mg/cm$^2$. For example, the loading level of the positive electrode active material layer may be about 39.13 mg/cm$^2$.

For example, the loading level of the negative electrode active material layer may be about 20 mg/cm$^2$ to about 24 mg/cm$^2$, e.g., about 20.5 mg/cm$^2$ to about 24 mg/cm$^2$, about 20.5 mg/cm$^2$ to about 23.8 mg/cm$^2$, about 21.8 mg/cm$^2$ to about 23.8 mg/cm$^2$, or about 21.8 mg/cm$^2$ to about 23.6 mg/cm$^2$.

When the loading level of the positive electrode active material layer and the loading level of the negative electrode active material layer satisfy the above numerical ranges, the N/P ratio of the aforementioned rechargeable lithium battery may be optimized to an appropriate range to implement a rechargeable lithium battery having excellent cycle-life characteristics.

For example, the N/P ratio of the rechargeable lithium battery may be set by controlling the loading level of the negative electrode active material layer. For example, by fixing the loading level of the positive electrode active material layer to about 39.13 mg/cm$^2$ and then adjusting the loading level of the negative electrode active material layer to about 21.8 mg/cm$^2$ to about 23.6 mg/cm$^2$, a rechargeable lithium battery having an N/P ratio of greater than or equal to about 1.33 and less than about 1.48 may be designed.

For example, the thickness of the positive electrode active material layer may be about 150 $\mu$m to about 170 $\mu$m, e.g., about 150 $\mu$m to about 160 $\mu$m or about 155 $\mu$m to about 160 $\mu$m. For example, the thickness of the positive electrode active material layer may be about 157 $\mu$m.

For example, the thickness of the negative electrode active material layer may be about 150 $\mu$m to about 180 $\mu$m, e.g., about 150 $\mu$m to about 175 $\mu$m, about 153 $\mu$m to about 175 $\mu$m, about 153 $\mu$m to about 170 $\mu$m, or about 153 $\mu$m to about 169 $\mu$m.

As described above, when the N/P ratio of the rechargeable lithium battery is optimized by fixing the loading level of the positive electrode active material layer and adjusting the loading level of the negative electrode active material layer within the above-described numerical range, the thicknesses of the positive electrode active material layer and the negative electrode active material layer may be included within the above-described numerical range. In conclusion, when the thicknesses of the positive electrode active material layer and the negative electrode active material layer satisfy the above-described numerical range, the N/P ratio is optimized within an appropriate range, so that a rechargeable lithium battery with excellent cycle-life characteristics may be realized.

For example, when the thickness of the positive electrode active material layer is fixed at about 157 $\mu$m, the thickness of the negative electrode active material layer may be about 153 $\mu$m to about 169 $\mu$m.

For example, the mixture density of the positive electrode may be about 2.0 g/cc to about 4.0 g/cc, e.g., about 2.0 g/cc to about 3.5 g/cc, about 2.0 g/cc to about 3.0 g/cc, or about 2.5 g/cc to about 3.5 g/cc.

For example, the mixture density of the negative electrode may be about 1.0 g/cc to about 4.0 g/cc, e.g., about 1.0 g/cc to about 3.0 g/cc, about 1.0 g/cc to about 2.0 g/cc, about 1.2 g/cc to about 2.0 g/cc, or about 1.2 g/cc to about 1.8 g/cc.

For example, because the loading level of the negative electrode active material layer may be adjusted to optimize the N/P ratio of the rechargeable lithium battery, the mixture density of the positive electrode and the mixture density of the negative electrode may be fixed to a specific value within the aforementioned numerical range.

Positive Electrode Active Material

As the positive electrode active material, a compound capable of intercalating and deintercalating lithium (lithiated intercalation compound) may be used.

In some example embodiments, the positive electrode active material includes a lithium iron phosphate positive electrode active material.

The lithium iron phosphate positive electrode active material is an active material having an olivine structure, and has the advantages of excellent stability and cycle-life characteristics, as well as excellent thermal and chemical safety.

Due to these characteristics, the lithium iron phosphate positive electrode active material may be suitable for use in energy storage systems (ESS) that require periodic charge and discharge.

For example, the lithium iron phosphate positive electrode active material may include a compound represented by Chemical Formula 1 or Chemical Formula 2.

[Chemical Formula 1]        $Li_{a1}Fe_{(1-x1)}M1_{x1}PO_4$

In Chemical Formula 1, $0.90 \leq a1 \leq 1.5$, $0 \leq x1 \leq 0.4$, and M1 may be Al, B, Ca, Ce, Cr, Cu, La, Mg, Mn, Mo, Nb, Ni, Si, Sn, Sr, Ti, V, W, Y, Zn, Zr, or a combination thereof. Here, it may be $0.90 \leq a1 \leq 1.5$, e.g., $0.90 \leq a1 \leq 1.2$, or $0.95 \leq a1 \leq 1.1$. Additionally, it may be $0 \leq x1 \leq 0.4$, $0 \leq x1 \leq 0.3$, $0 \leq x1 \leq 0.2$, $0 \leq x1 \leq 0.1$ or $0 \leq x1 \leq 0.05$.

[Chemical Formula 2]        $Li_{a2}Mn_{x2}Fe_{(1-x2-y2)}M2_{y2}PO_4$

In Chemical Formula 2, $0.90 \leq a2 \leq 1.5$, $0.1 \leq x2 \leq 0.9$, $0 \leq y2 \leq 0.9$, and M2 may be Al, B, Ca, Ce, Cr, Cu, La, Mg, Mo, Nb, Ni, Si, Sn, Sr, Ti, V, W, Y, Zn, Zr, or a combination thereof. Here, it may be $0.90 \leq a2 \leq 1.5$, e.g., $0.90 \leq a2 \leq 1.2$, or $0.95 \leq a2 \leq 1.1$. Additionally, it may be $0.1 \leq x2 \leq 0.9$, $0.3 \leq x2 \leq 0.9$, or $0.4 \leq x2 \leq 0.8$, and $0 \leq y2 \leq 0.4$, $0 \leq y2 \leq 0.3$, $0 \leq y2 \leq 0.2$, $0 \leq y2 \leq 0.1$, or $0 \leq y2 \leq 0.05$.

For example, the lithium iron phosphate positive electrode active material may include $LiFePO_4$, $LiMn_{0.7}Fe_{0.3}PO_4$, $LiMn_{0.6}Fe_{0.4}PO_4$, $LiMn_{0.5}Fe_{0.5}PO_4$, $LiMn_{0.4}Fe_{0.6}PO_4$, $LiMn_{0.3}Fe_{0.7}PO_4$, or a combination thereof.

In some example embodiments, the lithium iron phosphate compound may be in a form of first particles, second particles, or a mixture of first particles and second particles.

The first particles may be an assembly or a secondary particle of a plurality of nano-sized primary particles. The primary particles may have a spherical or ellipsoidal shape as the primary particles are closely packed together. An average particle size of the first particles may be, e.g., about 2 μm to about 15 μm, about 3 μm to about 12 μm, or about 3 μm to about 10 μm. The average particle diameter of the first particles may be larger than the average particle diameter of the second particles, which will be described later. An average particle size of the primary particles of the first particle may be, e.g., about 10 nm to about 400 nm, about 20 nm to about 300 nm, or about 50 nm to about 200 nm. For example, the average particle diameter of the first particles may be obtained by randomly selecting about 30 first particles from an electron microscope image of the lithium iron phosphate compound, measuring the particle diameter, and taking the diameter (D50) of the particles having a cumulative volume of 50 volume% from the particle size distribution as the average particle diameter. The average particle diameter of the primary particles of the first particle may be obtained by measuring the sizes of about 30 primary particles in an electron microscope image of the surface or cross-section of the first particle and taking the diameter (D50) of the particles having a cumulative volume of 50 volume% in the particle size distribution as the average particle diameter.

A porosity of the first particles may be about 20% to about 50%. The porosity may be, e.g., obtained by measuring an area ratio of the portion occupied by pores within the particle using an image analysis program such as Image J in a scanning electron microscope image of a cross-section of the first particle.

The second particles may have a form of a single particle. An average particle size of the second particles may be, e.g., about 10 nm to about 900 nm, about 50 nm to about 500 nm, or about 100 nm to about 300 nm. The average particle diameter of the second particles may be smaller than the average particle diameter of the first particles, and may be equal to or larger than the average particle diameter of the primary particles of the first particles. For example, the average particle size of the second particles may be obtained by randomly selecting about 30 second particles from an electron microscope image of a lithium iron phosphate compound, measuring the particle sizes, and taking the diameter (D50) of the particles having a cumulative volume of 50 volume% from the particle size distribution as the average particle size.

The lithium iron phosphate compound may further include a carbon coating layer on the particle surface. The carbon coating layer can improve the electrical conductivity of the lithium iron phosphate compound and reduce the resistance of the positive electrode. The carbon coating layer may be formed using at least one raw material selected from, e.g., glucose, sucrose, lactose, starch, oligosaccharides, polyoligosaccharides, fructose, cellulose, a polymer of furfuryl alcohol, a block copolymer of ethylene and ethylene oxide, a vinyl resin, a cellulose resin, a phenol resin, a pitch resin, and a tar resin. For example, the carbon coating layer may be formed by arranging the raw materials on the surface of the lithium iron phosphate compound particles and then performing a firing process.

For example, the positive electrode active material may further include a lithium nickel oxide, a lithium cobalt oxide, a lithium manganese oxide, a lithium iron phosphate compound, a cobalt-free lithium nickel-manganese oxide, or a combination thereof.

For example, the positive electrode active material may further include a compound represented by one of the following chemical formulas.

$Li_aA_{1-b}X_bO_{2-c}D'_c$ ($0.90 \leq a \leq 1.8$, $0 \leq b \leq 0.5$, $0 \leq c \leq 0.05$); $Li_aMn_{2-b}X_bO_{4-c}D'_c$ ($0.90 \leq a \leq 1.8$, $0 \leq b \leq 0.5$, $0 \leq c \leq 0.05$); $Li_aNi_{1-b-c}Co_bX_cO_{2-\alpha}D'_\alpha$ ($0.90 \leq a \leq 1.8$, $0 \leq b \leq 0.5$, $0 \leq c \leq 0.5$, $0 < \alpha < 2$); $Li_aNi_{1-b-c}Mn_dX_cO_{2-\alpha}D'_\alpha$ ($0.90 \leq a \leq 1.8$, $0 \leq b \leq 0.5$, $0 \leq c \leq 0.5$, $0 < \alpha < 2$); $Li_aNi_bCo_cL^1_dG_eO_2$ ($0.90 \leq a \leq 1.8$, $0 \leq b \leq 0.9$, $0 \leq c \leq 0.5$, $0 \leq d \leq 0.5$, $0 \leq e \leq 0.1$); $Li_aNiG_bO_2$ ($0.90 \leq a \leq 1.8$, $0.001 \leq b \leq 0.1$); $Li_aCoG_bO_2$ ($0.90 \leq a \leq 1.8$, $0.001 \leq b \leq 0.1$); $Li_aMn_{1-b}G_bO_2$ ($0.90 \leq a \leq 1.8$, $0.001 \leq b \leq 0.1$); $Li_aMn_2G_dO_4$ ($0.90 \leq a \leq 1.8$, $0.001 \leq b \leq 0.1$); $Li_aMn_{1-g}G_gPO_4$ ($0.90 \leq a \leq 1.8$, $0 \leq g \leq 0.5$); $Li_{(3-f)}Fe_2(PO_4)_3$ ($0 \leq f \leq 2$); $Li_aFePO_4$ ($0.90 \leq a \leq 1.8$).

In the chemical formulas, A is Ni, Co, Mn, or a combination thereof; X may be Al, Ni, Co, Mn, Cr, Fe, Mg, Sr, V, a rare earth element, or a combination thereof; D' may be O, F, S, P, or a combination thereof; G may be Al, Cr, Mn, Fe, Mg, La, Ce, Sr, V, or a combination thereof; and $L^1$ may be Mn, Al, or a combination thereof.

For example, the positive electrode active material may be a high nickel positive electrode active material in which the nickel content is greater than or equal to about 80 mol%, greater than or equal to about 85 mol%, greater than or equal to about 90 mol%, greater than or equal to about 91 mol%, or greater than or equal to about 94 mol%, and less than or equal to about 99 mol%, based on 100 mol% of metal excluding lithium in a lithium transition metal composite oxide. The high-nickel positive electrode active material may achieve high capacity and may be applied to high-capacity, high-density rechargeable lithium batteries.

Positive Electrode

The positive electrode for a rechargeable lithium battery may include a current collector and a positive electrode active material layer on the current collector. The positive electrode active material layer includes a positive electrode active material and may further include a binder and/or conductive material.

For example, the positive electrode may further include an additive that can act as a sacrificial positive electrode.

An amount of the positive electrode active material may be about 90 wt% to about 99.5 wt% based on 100 wt% of the positive electrode active material layer, and each amount of the binder and conductive material may be about 0.5 wt% to about 5 wt%, respectively, based on 100 wt% of the positive electrode active material layer.

The binder serves to attach the positive electrode active material particles to each other and also to attach the positive electrode active material to the current collector. Examples of the binder may include polyvinyl alcohol, carboxymethylcellulose, hydroxypropylcellulose, diacetylcellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like.

The conductive material is used to impart conductivity to the electrode, and any material that does not cause chemical change and conducts electrons can be used in the battery. Examples of the conductive material may include a carbon material such as natural graphite, artificial graphite, carbon black, acetylene black, Ketjen black, a carbon fiber, a carbon nanofiber, and carbon nanotube; a metal material including copper, nickel, aluminum, silver, etc., in a form of a metal powder or a metal fiber; a conductive polymer such as a polyphenylene derivative; or a mixture thereof.

The current collector may include Al.

Negative Electrode Active Material

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon negative electrode active material.

For example, the carbon negative electrode active material may include crystalline carbon, amorphous carbon, or a combination thereof. The crystalline carbon may be graphite such as non-shaped, sheet-shaped, flake-shaped, sphere-shaped, or fiber-shaped natural graphite or artificial graphite, and the amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si negative electrode active material or a Sn negative electrode active material. The Si negative electrode active material may include silicon, a silicon-carbon composite, $SiO_x$ ($0 < x \leq 2$), a Si-Q alloy (wherein Q is selected from an alkali metal, an alkaline-earth metal, a Group 13 element, a Group 14 element (excluding Si), a Group 15 element, a Group 16 element, a transition metal, a rare earth element, and a combination thereof), or a combination thereof. The Sn negative electrode active material may include Sn, $SnO_2$, a Sn alloy, or a combination thereof.

The silicon-carbon composite may be a composite of silicon and amorphous carbon. According to some example embodiments, the silicon-carbon composite may be in a form of silicon particles and amorphous carbon coated on the surface of the silicon particles. For example, it may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si negative electrode active material or the Sn negative electrode active material may be used in combination with a carbon negative electrode active material.

Negative Electrode

The negative electrode for a rechargeable lithium battery includes a current collector and a negative electrode active material layer on the current collector. The negative electrode active material layer includes a negative electrode active material and may further include a binder and/or a conductive material.

For example, the negative electrode active material layer may include about 90 to about 99 wt% of the negative electrode active material, about 0.5 to about 5 wt% of the binder, and about 0 to about 5 wt% of the conductive material, based on 100 wt% of the negative electrode active material layer.

The binder serves to attach the negative electrode active material particles to each other and also to attach the negative electrode active material to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is used as the negative electrode binder, a cellulose compound capable of imparting viscosity may be further included. The cellulose compound may include at least one of carboxymethyl cellulose, hydroxypropylmethyl cellulose, methyl cellulose, or an alkali metal salt thereof. The alkali metal may include Na, K, or Li.

The dry binder may be a polymer material capable of being fibrous, e.g., polytetrafluoroethylene, polyvinylidene fluoride, a polyvinylidene fluoride-hexafluoropropylene copolymer, polyethylene oxide, or a combination thereof.

The conductive material is included to provide electrode conductivity and any electrically conductive material may be used as a conductive material unless it causes a chemical change. Examples of the conductive material include a carbon material such as natural graphite, artificial graphite, carbon black, acetylene black, Ketjen black, a carbon fiber, a carbon nanofiber, a carbon nanotube, and the like; a metal material of a metal powder or a metal fiber including copper, nickel, aluminum silver, and the like; a conductive polymer such as a polyphenylene derivative; or a mixture thereof.

The negative electrode current collector may be selected from copper foil, nickel foil, stainless steel foil, titanium foil, nickel foam, copper foam, a polymer substrate coated with a conductive metal, and a combination thereof.

Electrolyte Solution

The electrolyte solution for a rechargeable lithium battery includes a non-aqueous organic solvent and a lithium salt.

The non-aqueous organic solvent serves as a medium for transmitting ions taking part in the electrochemical reaction of a battery.

The non-aqueous organic solvent may be a carbonate, ester, ether, ketone, or alcohol solvent, an aprotic solvent, or a combination thereof.

The carbonate solvent may be dimethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester solvent may include methyl acetate, ethyl acetate, n-propyl acetate, dimethylacetate, methylpropionate, ethylpropionate, decanolide, mevalonolactone, valerolactone, caprolactone, and the like. The ether solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone solvent may include cyclohexanone, and the like. The alcohol solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvent may be used alone or in a mixture of two or more types.

In addition, when using a carbonate solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. For example, the lithium salt may include at least one selected from $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)$ $(C_yF_{2y+1}SO_2)$, x and y are integers of 1 to 20, lithium trifluoromethane sulfonate, lithium tetrafluoroethanesulfonate, lithium difluorobis(oxalato)phosphate (LiDFOP), and lithium bis(oxalato) borate (LiBOB).

Separator

Depending on the type of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of any one selected polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON®), or a copolymer or mixture of two or more thereof.

The organic material may include a polyvinylidene fluoride polymer or a (meth)acrylic polymer.

The inorganic material may include inorganic particles selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof.

The organic material and the inorganic material may be mixed in one coating layer, or a coating layer including an organic material and a coating layer including an inorganic material may be stacked.

The following Examples and Comparative Examples are provided in order to highlight characteristics of one or more embodiments, but it will be understood that the Examples and Comparative Examples are not to be construed as limiting the scope of the embodiments, nor are the Comparative Examples to be construed as being outside the scope of the embodiments. Further, it will be understood that the embodiments are not limited to the particular details described in the Examples and Comparative Examples.

EXAMPLES:

Example 1

96.36 wt% of $LiFePO_4$ as a lithium iron phosphate compound, 2 wt% of polyvinylidene fluoride as a binder, and 1.64 wt% of Ketjen black as a conductive material were mixed in an N-methylpyrrolidone solvent to prepare a positive electrode active material slurry. The positive electrode active material slurry was coated on an aluminum foil current collector, and then, dried and compressed to manufacture a positive electrode.

Subsequently, 97.3 wt% of a negative electrode active material prepared by mixing natural graphite and artificial graphite in a weight ratio of 5:5, 1.7 wt% of carboxymethyl cellulose, and 1 wt% of styrene butadiene rubber were mixed in a water solvent to prepare a negative electrode active material layer slurry. The negative electrode active material layer slurry was coated on a copper foil current collector, and then, dried and compressed to manufacture a negative electrode.

A polytetrafluoroethylene separator and an electrolyte, which was prepared by mixing ethylene carbonate and dimethyl carbonate in a volume ratio of 3:7, and then, dissolving 1 M $LiPF_6$ in the mixed solvent, were used to manufacture a rechargeable lithium battery cell according to Example 1 in a common method.

In the rechargeable lithium battery cell of Example 1, after setting the positive electrode active material layer at a loading level of 39.13 mg/cm$^2$ and the negative electrode active material layer at a loading level of 21.82 mg/cm$^2$, an N/P ratio was calculated according to Equation 1 and then shown in Table 1.

An N/P ratio = (loading level of negative electrode active material layer * wt% of negative electrode active material relative to 100 wt% of negative electrode active material layer * capacity of negative electrode active material))/(loading level of positive electrode active material layer * wt% of positive electrode active material relative to 100 wt% of positive electrode active material layer * capacity of positive electrode active material)    [Equation 1]

Herein, the positive electrode active material layer had a thickness of 157 $\mu$m, while the negative electrode active material layer had a thickness of 153 $\mu$m, the positive electrode had mixture density of 2.5 g/cc, while the negative electrode of mixture density of 1.43 g/cc, and the positive electrode active material had capacity of 148 mAh/g, while the negative electrode active material had capacity of 349.5 mAh/g.

Examples 2 to 3 and Comparative Examples 1 to 5

A rechargeable lithium battery cell was manufactured in the same manner as in Example 1 except that the N/P ratio was designed by adjusting the loading level of the negative electrode active material layer as shown in Table 1.

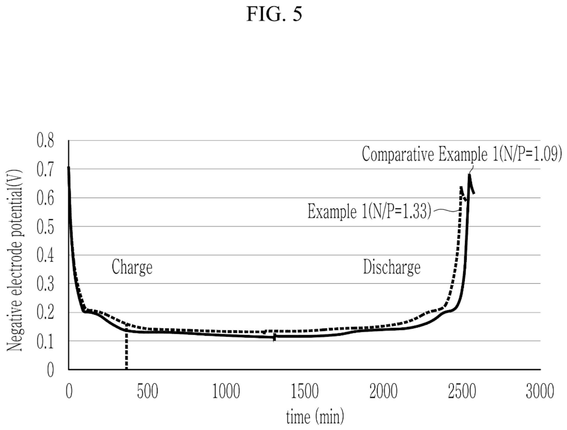

For reference, FIG. 5 is a graph showing a change in a negative electrode potential during the charge and discharge of the rechargeable lithium battery cells of Example 1 and Comparative Example 1. The charge and discharge were performed under the following conditions.

Charge - CC/CV 0.5 C- 3.65 V, 0.2 C cut-off, 10 min
Discharge - CC 1.0 C-2.50 V cut-off, 10 min
RPT: CH 0.33 C, 3.65 V, 0.02 C cut-off 30 min
DCH: 0.33 C, 2.5 V cut-off 30 min.

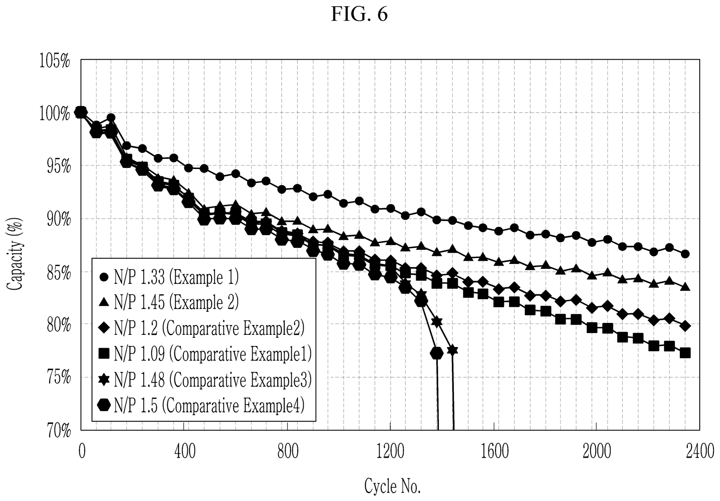

Referring to FIG. 5, when N/P=1.09 (Comparative Example 1), compared with N/P=1.33 (Example 1), the potential of the negative electrode was lowered during the charge but more lowered during the charge and discharge, which confirmed that the negative electrode was more used. The more use of the negative electrode, the more disadvantageous effect on cycle-life characteristics of batteries, which was confirmed through the graph of FIG. 6 described later.

(Table 1)

|  | N/P ratio | Loading level of positive electrode active material layer (mg/cm$^2$) | Loading level of negative electrode active material layer (mg/cm$^2$) |
|---|---|---|---|
| Example 1 | 1.33 | 39.13 | 21.82 |
| Example 2 | 1.45 | 39.13 | 23.57 |
| Comparative Example 1 | 1.09 | 39.13 | 17.89 |
| Comparative Example 2 | 1.2 | 39.13 | 19.52 |
| Comparative Example 3 | 1.48 | 39.13 | 24.11 |
| Comparative Example 4 | 1.5 | 39.13 | 24.43 |

(Evaluation Examples)

Evaluation Example 1: Room-temperature Capacity Retention (%) Measurement

The rechargeable lithium battery cells of Examples 1 to 2 and Comparative Examples 1 to 4 were constant current-charged to 3.65 V at 0.5 C and constant voltage-charged to 0.2 C and then, discharged to 2.5 V at 1.0 C at room temperature (25 °C) for initial charge and discharge.

Subsequently, the cells were constant current-charged to 3.65 V at 0.33 C and constant voltage-charged to 0.02 C and then, discharged to 2.5 V at 1.0 C, which was 2400 cycles repeated to measure capacity retention, and the results are shown in FIG. 6.

Referring to FIG. 6, the examples, in which an N/P ratio of the rechargeable lithium battery cells was optimized by adjusting a loading level of the negative electrode active material layers, exhibited larger capacity retention at room temperature than the comparative examples, which confirmed superbly excellent room-temperature cycle-life characteristics.

By way of summation and review, because the rechargeable lithium batteries, which are recharged after the discharge and continuously used, may exhibit performance differences depending on their charge/discharge state, efforts to improve the performance of the rechargeable lithium batteries by improving a charge method are being made. Therefore, example embodiments provide a rechargeable lithium battery having excellent cycle-life characteristics.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the spirit and scope of the present invention as set forth in the following claims.

**Claims**

1. A rechargeable lithium battery, comprising

   a positive electrode including a positive electrode active material layer, a negative electrode including a negative electrode active material layer, and an electrolyte,
   wherein the positive electrode active material layer includes a lithium iron phosphate positive electrode active material, and
   wherein the rechargeable lithium battery has an N/P ratio of greater than or equal to 1.33 and less than 1.48.

2. The rechargeable lithium battery as claimed in claim 1, wherein a loading level of the positive electrode active material layer is 39 mg/cm$^2$ to 40 mg/cm$^2$.

3. The rechargeable lithium battery as claimed in claim 1, wherein a loading level of the negative electrode active material layer is 20 mg/cm$^2$ to 24 mg/cm$^2$.

4. The rechargeable lithium battery as claimed in claim 1, wherein a loading level of the negative electrode active material layer is 21.8 mg/cm$^2$ to 23.6 mg/cm$^2$.

5. The rechargeable lithium battery as claimed in any one of claims 1 to 4, wherein a thickness of the positive electrode active material layer is 150 $\mu$m to 170 $\mu$m.

6. The rechargeable lithium battery as claimed in any one of claims 1 to 5, wherein a thickness of the negative electrode active material layer is 150 $\mu$m to 180 $\mu$m.

7. The rechargeable lithium battery as claimed in any one of claims 1 to 6, wherein a mixture density of the positive electrode is 2.0 g/cc to 4.0 g/cc.

8. The rechargeable lithium battery as claimed in any one of claims 1 to 7, wherein a mixture density of the negative electrode is 1.0 g/cc to 4.0 g/cc.

9. The rechargeable lithium battery as claimed in any one of claims 1 to 8, wherein:

   the lithium iron phosphate positive electrode active material includes a compound represented by Chemical Formula 1 or Chemical Formula 2:

   [Chemical Formula 1]  $Li_{a1}Fe_{(1-x1)}M1_{x1}PO_4$

wherein, in Chemical Formula 1, $0.90 \leq a1 \leq 1.5$, $0 \leq x1 \leq 0.4$, and M1 is Al, B, Ca, Ce, Cr, Cu, La, Mg, Mn, Mo, Nb, Ni, Si, Sn, Sr, Ti, V, W, Y, Zn, Zr, or a combination thereof,

[Chemical Formula 2]     $Li_{a2}Mn_{x2}Fe_{(1-x2-y2)}M2_{y2}PO_4$

wherein, in Chemical Formula 2, $0.90 \leq a2 \leq 1.5$, $0.1 \leq x2 \leq 0.9$, $0 \leq y2 \leq 0.9$, and M2 is Al, B, Ca, Ce, Cr, Cu, La, Mg, Mo, Nb, Ni, Si, Sn, Sr, Ti, V, W, Y, Zn, Zr, or a combination thereof.

10. The rechargeable lithium battery as claimed in any one of claims 1 to 9, wherein the lithium iron phosphate positive electrode active material includes $LiFePO_4$, $LiMn_{0.7}Fe_{0.3}PO_4$, $LiMn_{0.6}Fe_{0.4}PO_4$, $LiMn_{0.5}Fe_{0.5}PO_4$, $LiMn_{0.4}Fe_{0.6}PO_4$, $LiMn_{0.3}Fe_{0.7}PO_4$, or a combination thereof.

11. The rechargeable lithium battery as claimed in any one of claims 1 to 10, wherein the negative electrode active material layer includes a carbon negative electrode active material.

12. The rechargeable lithium battery as claimed in claim 11, wherein the carbon negative electrode active material includes crystalline carbon, amorphous carbon or a combination thereof.

13. The rechargeable lithium battery as claimed in claim 11 or 12, wherein the negative electrode active material layer further includes a silicon negative electrode active material.

# FIG. 1

# FIG. 2

EP 4 730 433 A1

## FIG. 3

FIG. 4

FIG. 5

## FIG. 6

**EUROPEAN SEARCH REPORT**

| Application Number |
| --- |
| EP 25 20 7536 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | WO 2024/049508 A2 (NOVELIS INC [US]; GEORGIA TECH RES INST [US]) 7 March 2024 (2024-03-07) * claims 1, 14 * * paragraphs [0092], [0109] * * figure 4 * ----- | 1-13 | INV. H01M4/52 H01M4/58 |
| A | JP 2012 084322 A (TOYOTA MOTOR CORP) 26 April 2012 (2012-04-26) * claim 1 * * paragraphs [0044], [0112], [0113] * ----- | 1-13 | |

| TECHNICAL FIELDS SEARCHED (IPC) |
| --- |
| H01M |

The present search report has been drawn up for all claims

| Place of search | Date of completion of the search | Examiner |
| --- | --- | --- |
| Munich | 4 March 2026 | Riederer, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 7536

04-03-2026

| Patent document cited in search report | | Publication date | Patent family member(s) | | Publication date |
|---|---|---|---|---|---|
| WO 2024049508 | A2 | 07-03-2024 | CN | 118974971 A | 15-11-2024 |
| | | | EP | 4505535 A2 | 12-02-2025 |
| | | | JP | 2025513787 A | 30-04-2025 |
| | | | KR | 20240155906 A | 29-10-2024 |
| | | | US | 2025226402 A1 | 10-07-2025 |
| | | | WO | 2024049508 A2 | 07-03-2024 |
| JP 2012084322 | A | 26-04-2012 | JP | 5464116 B2 | 09-04-2014 |
| | | | JP | 2012084322 A | 26-04-2012 |

For more details about this annex : see Official Journal of the European Patent Office, No. 12/82